(19) Europäisches Patentamt
European Patent Office
Office européen des brevets

(11) Veröffentlichungsnummer: **0 259 653 B1**

# (12) EUROPÄISCHE PATENTSCHRIFT

(45) Veröffentlichungstag der Patentschrift: **27.12.91**

(51) Int. Cl.5: **H01B 3/44**, H01B 7/28, C08L 23/00, C08K 5/54

(21) Anmeldenummer: **87111885.7**

(22) Anmeldetag: **17.08.87**

## (54) Spannungsstabilisierte Kunststoffisolierung.

(30) Priorität: **22.08.86 DE 3628554**

(43) Veröffentlichungstag der Anmeldung:
**16.03.88 Patentblatt 88/11**

(45) Bekanntmachung des Hinweises auf die Patenterteilung:
**27.12.91 Patentblatt 91/52**

(84) Benannte Vertragsstaaten:
**CH DE GB LI SE**

(56) Entgegenhaltungen:
**EP-A- 0 023 239**
**EP-A- 0 025 091**
**DE-A- 2 805 875**
**GB-A- 2 055 854**
**US-A- 4 212 756**
**US-A- 4 501 688**

(73) Patentinhaber: **Licentia Patent-Verwaltungs-GmbH**
**Theodor-Stern-Kai 1**
**W-6000 Frankfurt/Main 70(DE)**

(72) Erfinder: **Wartusch, Johann**
**Am Kaiserberg 13**
**W-3502 Vellmar(DE)**

(74) Vertreter: **Vogl, Leo, Dipl.-Ing. et al**
**Licentia Patent-Verwaltungs-G.m.b.H.**
**Theodor-Stern-Kai 1**
**W-6000 Frankfurt 70(DE)**

**EP 0 259 653 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Kunststoffisolierung nach dem Oberbegriff des Anspruchs 1.

Solche Kunststoffisolierungen werden hauptsächlich zur Isolierung von Hochspannungskabeln verwendet. In ihnen können sich bei Spannungsbeanspruchung sogenannte treeing-Phänomene ausbilden, das sind mikroskopisch sichtbare, bäumchenartige bzw. büschelartige Zerstörungserscheinungen in der Isolierung. Von großer Bedeutung sind die "watertrees", die bei hohen Feldstärken an Fehlstellen auftreten, in denen Wasser konzentriert ist. Zur Vermeidung der watertrees bzw. der Hemmung ihres Wachstums werden der Isolierung Stabilisatoren zugesetzt.

Aus der EP - A-247 392 ist eine Kunststoffisolierung aus Polyethylen und hydrolisierbarem Alkoxysilan bekannt, bei dem drei Sauerstoffatome, welche an das Silizium gebunden sind, mit einer Kohlenstoffkette oder einem Aromaten verbunden sind. In beiden Alternativen verbinden die Sauerstoffatome jeweils ein Silizium- und ein Kohlenstoffatom.

Aus der DE-OS 34 18 792 ist es bekannt, einer Polyolefin-Isolierung Spannungsstabilisatoren aus Alkoxysilanen zuzusetzen. Die Alkoxysilane der allgemeinen Formel $R_x$-Si (O-R') $_{4-x}$ wobei x = 0 bis 3 ist, enthalten in R einen aliphatischen, aromatischen oder cycloaliphatischen Kohlenwasserstoffrest, der gegebenenfalls noch durch Amino-, Epoxigruppen oder andere substituiert sein kann. Insbesondere ist R' ein Hydroxyalkylrest.

Die bekannten Spannungsstabilisatoren zeigen jedoch eine nicht immer ausreichende Mischbarkeit mit dem Basispolymer, so daß die Herstellung der Isolierung erschwert ist. Wenn die spannungsstabilisierenden Zusätze nicht homogen in der Mischung vorliegen, ist zudem ihre Wirksamkeit sehr stark eingeschränkt; denn die Migrationswege zu den watertrees werden dann, wenn diese Schädigung auftritt, im Mittel zu groß.

Der Erfindung liegt die Aufgabe zugrunde, eine Kunststoffisolierung anzugeben, die diese Nachteile nicht aufweist; das heißt, in das Grundmaterial sollen sich die Stabilisator-Zusätze gut einmischen lassen und letztere sollen sich auch bei erhöhter Temperatur während der anzunehmenden Gebrauchsdauer der Kunststoffisolierung nicht verflüchtigen.

Diese Aufgabe wird gemäß der Erfindung durch die im Patentanspruch 1 gekennzeichneten Merkmale gelöst.

Vorteilhafte Weiterbildungen der Erfindung sind in den Unteransprüchen enthalten.

Das Kunststoffisoliermaterial gemäß der Erfindung zeigt nicht nur eine gute Langzeitstabilität, sondern der Stabilisator läßt sich auch leicht in die Isolierung einmischen. Bei Verwendung von vernetztem Kunststoff-Grundmaterial wird die Vernetzung durch den Stabilisator-Zusatz nicht beeinträchtigt. Ferner wird nicht nur ein ausreichender Schutz gegen das watertree-Wachstum gewährleistet, sondern auch die Entstehung von "electrical trees" behindert. Unter den electrical trees werden Schädigungsstellen in der Isolierung verstanden, in denen zerstörende elektrische Entladungen ohne die Mitwirkung von eingelagertem Wasser stattfinden und die bei entsprechender Feldstärke rasch zum elektrischen Durchschlag führen.

Die Wirkung der erfindungsgemäßen Stabilisatoren ist darin begründet, daß sie sich durch das Fehlen von hydrophilen Gruppen sehr gut in das Basispolymer einmischen lassen.

Andererseits reagieren sie mit Wasser zu hochwirksamen hydrophilen Stabilisatoren. Das Wasser, das herstellungsbedingt vorhanden ist, bzw. beim Betrieb des Isolierstoffes in diesen eindiffundiert, wird auf diese Weise reduziert. Sollte sich an der Stelle der Isolierung, an welcher sich Stabilisatormoleküle befinden, ein watertree zu bilden beginnen, wird zunächst Wasser verbraucht, um den Stabilisator zu aktivieren. Der aktivierte Stabilisator verhindert dann das Wachstum der Defekte.

Aus den verätherten Alkoxysilanen entstehen also durch Hydrolyse Äther mit endständigen OH-Gruppen, die als wirksame Stabilisatorgruppen dienen.

Nachfolgend sollen einige Beispiele für Stabilisatoren und deren Wirkung aufgeführt werden.

Ein einfaches Alkoxysilan ist 1,1-Dimethyl-1-Sila-2,5,8-Trioxocan
der folgenden Struktur:

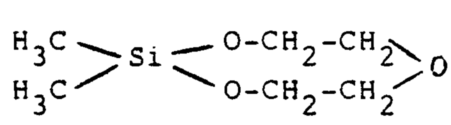

Es zerfällt unter der Einwirkung von Wasser zu Diäthylenglykol. Die OH-Gruppen waren zum Zwecke der besseren Mischbarkeit mit dem Polyolefin im Silan "maskiert".

Die Wirksamkeit dieses Stabilisators in einem vernetzten Polyäthylen mit 83 % Gel-Gehalt ersieht man

aus dem 8-Nadeltest. Während bei frischangelieferten unstabilisierten Proben die Länge der watertrees 65 µm im Durchschnitt und 100 µm im Maximum betrug, waren die entsprechenden Werte bei Zusatz von 1 % Stabilisator der oben angegebenen Zusammensetzung, 80 µm bzw. 115 µm. Wie üblich ersieht man aber die Verbesserung der VPE-Mischung erst bei den getemperten Proben, wenn die nur temporär wirkenden Peroxidspaltprodukte entfernt sind. Dabei wurden für die unbehandelten Proben 185 µm bzw. 315 µm im Maximum gemessen, während für die stabilisierten Proben sich im Mittel 85 µm und im Maximum 146 µm als Länge der watertrees ergab. Es zeigt sich also, daß unter realistischen, die Betriebsbedingungen nachahmenden Versuchsbedingungen die stabilisierte Mischung ein watertree-Wachstum von weniger als der Hälfte der unbehandelten Proben aufweist.

Eine Abwandlung dieses Alkoxysilans beruht auf der Möglichkeit, in der obigen Strukturformel die $CH_3$-Gruppen in einer der rechten Seite der Strukturformel analogen Weise zu besetzen. Die Diolkomponente im Alkoxysilan kann selbstverständlich auch eine zyklische Verbindung sein. Beispielsweise eine als "TCD-Alkohol DM" bekannte Flüssigkeit der folgenden Strukturformel:

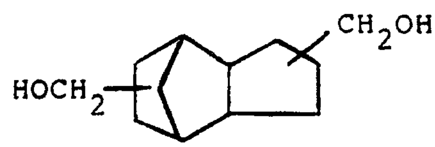

wobei die alkoholischen Gruppen als Kieselsäure-Ester vollständig verkappt sind.

Für das Einmischen der Alkoxysilane ist neben der chemischen Verträglichkeit und Mischbarkeit mit dem Basispolymer auch die Konsistenz des Spannungsstabilisators von Interesse. Vorzugsweise wird man flüssige Alkoxysilane auswählen. Wegen der Langzeitstabilität empfiehlt es sich, die Größe der Moleküle bzw. das Molekulargewicht derart auszuwählen, daß die Diffusion aus dem Material bei erhöhter Temperatur nur in vernachlässigbarerem Maße erfolgt. Die Hydrolyseprodukte des Alkoxysilans sollten daher Siedepunkte oberhalb von 140° C haben. Dazu ist es angebracht, beispielsweise statt der $CH_2$-$CH_2$-Folge in dem oben angeführten Alkoxysilan jeweils mehr als zwei $CH_2$-Gruppen hintereinander einzubauen.

Eine weitere Möglichkeit, das Molekulargewicht zu erhöhen, besteht darin, 2 einfache Alkoxysilane in der Weise zu koppeln, wie es die folgende Formel angibt:

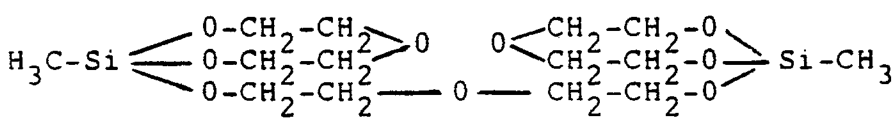

Die Verätherung in der Diolkomponente kann außer durch Sauerstoff in üblicher Weise zumindestens teilweise auch durch Schwefel erfolgen. Selbstverständlich können auch Gemische aus den einzelnen Stabilisatoren Verwendung finden.

Als Basispolymere verwendet man Polyolefine wie zum Beispiel Polyethylen, vernetzt oder unvernetzt, oder Elastomere. Auch Verschnitte von Basispolymeren untereinander können Verwendung finden.

Mit den hier beschriebenen maskierten Spannungsstabilisator-Zusätzen ist es möglich, im Durchschlagsverhalten verbesserte Isolierstoffe auf dem Gebiet der Elektrotechnik zur Verfügung zu stellen. Von besonderer wirtschaftlicher Bedeutung sind die Isolierungen von Hochspannungskabeln.

## Patentansprüche

1. Kunststoffisolierung auf Polyolefinbasis mit einem Spannungsstabilisator aus einem oder mehreren Alkoxysilanen, dadurch gekennzeichnet, daß die Alkoxireste veräthert sind und das durch Hydrolyse des Alkoxysilans hydrophile Verbindungen freisetzbar sind.

2. Kunststoffisolierung nach Anspruch 1 , dadurch gekennzeichnet, daß das Alkoxysilan folgende Zusammensetzung hat:

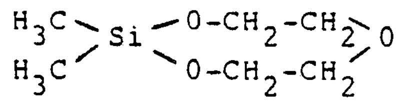

3. Kunststoffisolierung nach Anspruch 1, dadurch gekennzeichnet, daß das Alkoxysilan folgende Zusammensetzung hat:

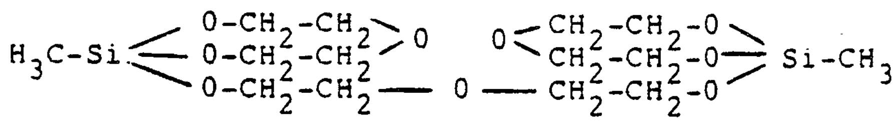

4. Kunststoffisolierung nach einem der Ansprüche 1 bis 3, dadurch gekennzeichnet, daß die $CH_2$-Ketten zumindest teilweise aus mindestens zwei $CH_2$-Gruppen in Folge bestehen.

5. Kunststoffisolierung nach Anspruch 1, dadurch gekennzeichnet, daß die Diolkomponente im Alkoxysilan eine zyklische Verbindung ist.

6. Kunststoffisolierung nach einem der Ansprüche 1 bis 4 und 6, dadurch gekennzeichnet, daß das Alkoxysilan zumindest teilweise anstelle des Sauerstoffäthers einen Thioäther aufweist.

7. Kunststoffisolierung nach einem der Ansprüche 1 bis 7, dadurch gekennzeichnet, daß der Spannungsstabilisator ein Gemisch aus verschiedenen Stabilisator-Verbindungen ist.

8. Kunststoffisolierung nach einem der Ansprüche 1 bis 8, dadurch gekennzeichnet, daß als Basispolymer Polyolefine Verwendung finden.

9. Kunststoffisolierung nach einem der Ansprüche 1 bis 9, dadurch gekennzeichnet, daß für die Isolierung als Basispolymer vernetztes oder unvernetztes Polyethylen Verwendung findet.

10. Kunststoffisolierung nach einem der Ansprüche 1 bis 8, dadurch gekennzeichnet, daß als Basispolymer Elastomere Verwendung finden.

11. Kunststoffisolierung nach einem der Ansprüche 1 bis 11, dadurch gekennzeichnet, daß als Basispolymer Copolymerisate von Basispolymeren Verwendung finden.

12. Kunststoffisolierung nach einem der Ansprüche 1 bis 12, dadurch gekennzeichnet, daß das Alkoxysilan bei Normalbedingungen flüssig ist.

13. Kunstoffisolierung nach einem der Ansprüche 1 bis 13, dadurch gekennzeichnet, daß die Hydrolyseprodukte des Alkoxysilans einen Siedepunkt oberhalb 140° C haben.

**Claims**

1. Synthetic material insulation on polyolefin base with a voltage stabiliser of one or more alkoxysilanes, characterised thereby, that the alkoxy residues are etherified and the hydrophilic compounds are liberated through hydrolysis of the alkoxysilane.

2. Synthetic material insulation according to claim 1, characterised thereby, that the alkoxysilane has the following composition:

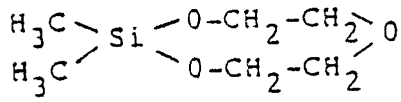

3. Synthetic material insulation according to claim 1, characterised thereby, that the alkoxysilane has the following composition:

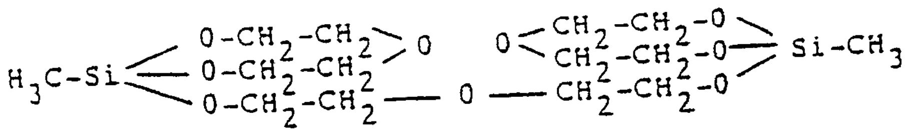

4. Synthetic material insulation according to one of claims 1 to 3, characterised thereby, that the $CH_2$ chain consists partly of at least two $CH_2$ groups in succession.

5. Synthetic material insulation according to claim 1, characterised thereby, that the diol component in the alkoxysilane is a cyclic compound.

6. Synthetic materal insulation according to one of the claims 1 to 4 and 6, characterised thereby, that the alkoxysilane has a thioether at least partly substituting the oxygen ether.

7. Synthetic material insulation according to one of claims 1 to 7, characterised thereby that, the voltage stabiliser is a mixture of different stabiliser compounds.

8. Synthetic material insulation according to one of claims 1 to 8, characterised thereby, that pololefins are used as base polymer.

9. Synthetic material insulation according to one of claims 1 to 9, characterised thereby, that cross-linked or non-cross-linked polyethylene is used as base polymer for the insulation.

10. Synthetic material insulation according to one of claims 1 to 8, characterised thereby, that elastomers are used as base polymer.

11. Synthetic material insulation according to one of claims 1 to 11, characterised thereby, that copolymerisates of base polymers are used as base polymer.

12. Synthetic material insulation according to one of claims 1 to 12, characterised thereby, that under normal conditions the alkoxysilane is liquid.

13. Synthetic material insulation according to one of claims 1 to 13, characterised thereby, that the hydrolysis products of the alkoxysilane have a boiling point above 140 °C.

## Revendications

1. Isolant en matière plastique à base polyoléfinique avec un stabilisateur de tension composé d'un ou de plusieurs alkoxysilanes, caractérisé en ce que les restes d'alkoxyde sont éthérifiés et que des composés hydrophiles peuvent être dégagés par hydrolyse de l'alkoxysilane.

2. Isolant en matière plastique selon la revendication 1, caractérisé en ce que l'alkoxysilane présente la composition suivante

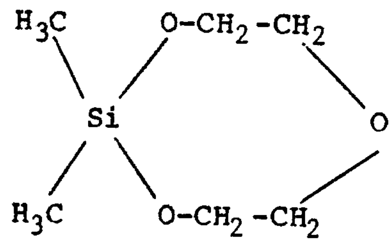

3. Isolant en matière plastique selon la revendication 1, caractérisé en ce que l'alkoxysilane présente la composition suivante

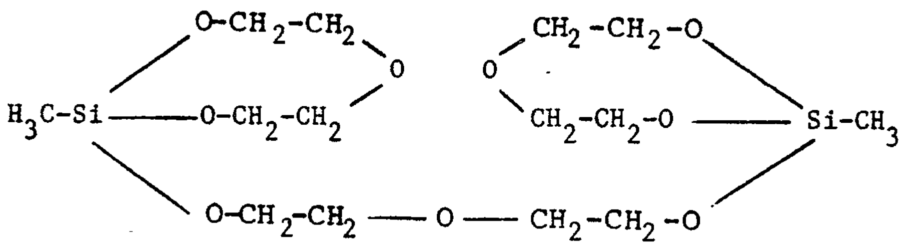

4. Isolant en matière plastique selon l'une des revendications 1 à 3, caractérisé en ce que les chaînes CH2 sont composées, au moins en partie, d'au minimum deux groupes CH2 consécutives.

5. Isolant en matière plastique selon la revendication 1, caractérisé en ce que le composant diol de l'alkoxysilane est un composé cyclique.

6. Isolant en matière plastique selon l'une des revendications 1 à 4 et 5, caractérisé en ce que l'alkoxysilane présente, au moins en partie, un thioéther au lieu de l'éther oxygéné.

7. Isolant en matière plastique selon l'une des revendications 1 à 6, caractérisé en ce que le stabilisateur de tension est un mélange de différents composés de stabilisateur.

8. Isolant en matière plastique selon l'une des revendications 1 à 7, caractérisé en ce que l'on utilise des polyoléfines en tant que Polymères de base.

9. Isolant en matière plastique selon l'une des revendications 1 à 8, caractérisé en ce que l'on utilise du polyéthylène réticulé ou non réticulé en tant que polymère de base pour l'isolation.

10. Isolant en matière plastique selon l'une des revendications 1 à 7, caractérisé en ce que l'on utilise des élastomères en tant que polymère de base.

11. Isolant en matière plastique selon l'une des revendications 1 à 10, caractérisé en ce que l'on utilise, comme polymère de base, des copolymères de polymères de base.

12. Isolant en matière plastique selon une des revendications 1 à 11, caractérisé en ce que dans des conditions normales, l'alkoxysilane se présente sous forme liquide.

13. Isolant en matière plastique selon l'une des revendications 1 à 12, caractérisé en ce que le point d'ébullition des produits d'hydrolyse de l'alkoxysilane est supérieur à 140 °C.